# EUROPÄISCHE PATENTSCHRIFT

(11) **EP 0 533 972 B1**
(45) Veröffentlichungstag und Bekanntmachung des Hinweises auf die Patenterteilung: **06.12.1995**
(21) Anmeldenummer: 91116275.8
(22) Anmeldetag: 24.09.1991
(51) Int. Cl.: H02H 3/33

(54) **Schutzeinrichtung für Schutzmassnahmen gegen Fehlerströme**
Protection device for protection measures against earth fault currents
Dispositif de protection pour mesures de protection contre des courants défectueux de défaut

(43) Veröffentlichungstag der Anmeldung: 31.03.1993
(73) Patentinhaber: SIEMENS AKTIENGESELLSCHAFT, 80333 München (DE)
(72) Erfinder: Solleder, Reinhard, Dipl.-Ing., W-8417 Hainsacker (DE); Schmid, Reinhard, Dipl.-Ing. (Univ.), W-8400 Regensburg (DE)

(56) Entgegenhaltungen:
- DE-A- 2 231 432
- DE-B- 1 175 349
- US-A- 3 473 091
- US-A- 3 728 580

## Beschreibung

Die Erfindung bezieht sich auf eine Schutzeinrichtung mit Fehlerstrom-Schutzschalter, nachstehend FI-Schutzschalter genannt, oder Differenzstromschalter, nachstehend DT-Schutzschalter genannt, an denen ein Schutzleiter des zu schützenden Netzes in einem Schutzleiterzweig bestimmungsgemäß am Schutzschalter vorbeigeführt ist, im einzelnen nach Gattungsbegriff von Patentanspruch 1. Hierbei ist der Schutzschalter mit dem Neutralleiter versorgungsseitig vor dem Schutzschalter zum sogenannten PEN-Leiter verbunden.

Bei Zweileiternetzen ist es bekannt, die Sicherheit durch Fehlerstromschutzschalter auch dann zu erhöhen, wenn bei Anschluß an ein Netz mit geerdetem Nulleiter keine Last anliegt und Erdschlüsse am Phasen- und am Nulleiter auftreten, wobei der Nulleiter ohnehin versorgungsseitig geerdet ist. Hierzu wird eine Impedanz zumindest in den Rückstrom führenden Nullleiter eingeschaltet (US-A-3 473 091, US-A-3 728 580 und DE-A-2 231 432). Damit ein Fehlerstromschutzschalter auch dann auslösen kann, wenn keine Last am Fehlerstromschutzschalter anliegt und ein Erdschluß sowohl am Nulleiter N als auch am Phasenleiter L auf der Lastseite des Fehlerstromschutzschalters auftritt, ist es bekannt, zwischen dem Lastanschluß einer Hauptprimärwicklung für den Nulleiter und dem Lastanschluß mindestens einer der anderen Primärwicklungen für einen Phasenleiter eine Impedanz, vorzugsweise einen Kondensator, einzuschalten (DE-A-2 231 432). Hierdurch kann bei fehlender Last und Erdschluß am Phasenleiter erreicht werden, daß die in den Primärwicklungen des Summenstromwandlers fließenden Ströme eine Auslösespannung in der Sekundärwicklung induzieren können.

Eine Beschaltung nach Gattungsbegriff von Patentanspruch 1 ergibt sich bei Schutzmaßnahmen gegen Fehlerströme, beispielsweise nach VDE-0100 Teil 410 (insbesonder Kapitel 29.1 bis 29.3) bei TN-C-Netzen, die in Verwendung mit einem Schutzschalter gegen Fehlerströme zu TN-C-S-Netzen aufgeteilt sind. Man vergleiche elektrische Installationstechnik, Günter G. Seip, ISBN 3-8009-1420-4 von 1985, Seite 1438ff. Hierbei beschreibt der erste Buchstabe die Erdungsverhältnisse der Stromquelle, also T für die direkte Erdung eines Netzpunktes, der zweite Buchstabe die Erdungsverhältnisse der Körper in der elektrischen Anlage, also N dafür, daß der Körper direkt mit dem Betriebserder verbunden ist, die weiteren Buchstaben die Anordnung von Schutz- und Neutralleiter im TN-Netz, also C dafür, daß die Schutz- und Neutralleiterfunktion in einem Leiter, dem PEN-Leiter, kombiniert ist, wobei S dafür steht, daß Schutz-und Neutralleiterfunktion teilweise durch getrennte Leiter sichergestellt ist. Bei einem Schutzschalter gegen Fehlerströme, sei es ein FI- oder DI-Schutzschalter, ist der Schutzleiter, der PE-Schutzleiter, nämlich am Schutzschalter vorbeizuführen, um eine Schutzschaltung gegen Fehlerströme sicherzustellen. In einem zu schützenden Netz, in dem ein Schutzleiter 4 bestimmungsgemäß am Schutzschalter vorbeigeführt ist, kann dann, wenn der durch den Schutzschalter hindurchgeführte N-Leiter in einem Verbraucher über einen Kurzschlußpfad mit einem Außenleiter, also mit Phase, verbunden ist und wenn eine Reihe von weiteren, unten geschilderten Zufällen auftreten, trotz der Schutzmaßnahme gegen Fehlerströme noch eine theoretische Gefährdung auftreten:

Wenn also beispielsweise eine nicht fachgerechte Reparatur eines Elektrogerätes erfolgt ist, und zwischen PE- und N-Leiter eine Kurzschlußbrücke auftritt, bilden der Schutzleiterzweig, PE-Leiter und der N-Leiter, die vor dem Schutzschalter im PEN-Leiter verbunden sind und im defekten Verbraucher durch die Kurzschlußbrücke verbunden sind, eine Leiterschleife. In dieser kann bei ungünstiger Widerstandsverteilung und infolge von Induktionswirkung bei einem fließenden Fehlerstrom über den N-Leiter ein so großer Rückstrom auftreten, daß der Schutzschalter evtl. nicht auslösen kann. Dann ist eine Gefährdung bei einer Reihe von weiteren ungünstigen Zufällen möglich:
- Es ist kein Verbraucher mit einer größeren Leistung angeschlossen bzw. zugeschaltet. Falls ein Verbraucher mit einer Leistung ab ca. 100 Watt zugeschaltet wird, löst die Schutzeinrichtung infolge der Stromaufteilung zwischen dem N-Leiter und dem PE-Leiter aus.
- Bei einer Schutzschaltersteckdose ist der Anschlußstecker derartig eingesteckt, daß die Verbindung zwischen dem N- und dem PE-Leiter über die Kurzschlußbrücke wirksam werden kann. Falls der Anschlußstecker so eingesteckt wird, daß die Verbindung zwischen dem Außenleiter und dem PE-Leiter, dem Schutzleiter, zustande kommt, ergibt sich ein satter Kurzschluß, der in einem TN-Netz zur sofortigen Abschaltung durch einen Leitungsschutzschalter bzw. durch die Sicherung führt.
- Bei der Verbindung zwischen dem Neutralleiter N und dem Schutzleiter PE ist eine niederohmige Verbindung zustandegekommen, wie sie praktisch nur durch falsches Klemmen oder Stecken zu erreichen ist; falls die Verbindung hochohmig ist, wie sie durch das Anlegen eines aus einer Klemme gelösten Drahtes zustandekommt, wird das Ansprechverhalten der Schutzeinrichtung nicht gestört.
- Darüber hinaus muß bei Vorliegen der vorausgenannten Zustände ein Anschlußkabel bzw. ein Anschlußstecker beschädigt sein, damit überhaupt ein direktes Berühren und damit eine Gefährdung für Lebewesen möglich ist.

Im Bestreben, die bereits mögliche hohe Sicherheit gegen Fehlerströme noch weiter zu erhöhen, werden in letzter Zeit auch Maßnahmen gegen ungewöhnliche Gefährdungssituationen in Fachkreisen erörtert.

Der Erfindung liegt die Aufgabe zugrunde, eine Schutzeinrichtung nach Gattungsbegriff zu entwickeln, bei der die Maßnahmen gegen Schädigungen durch Fehlerströme auch in den besonderen zuvor geschilderten Fällen nicht beeinträchtigt werden.

Die Lösung der geschilderten Aufgabe erfolgt duch eine Schutzeinrichtung nach Patentanspruch 1.

Erfindungsgemäß ist in dem Schutzleiterzweig ein Widerstand, ausgewählt aus einem gedachten komplexen Widerstand, eingeschaltet. Der Widerstand kann im Prinzip ein komplexer Widerstand sein, ein ohmscher, ein kapazitiver oder nach einer Weiterbildung ein induktiver Widerstand. Dadurch ist eine Auslösung durch den Schutzschalter auch dann sichergestellt, wenn durch falsche Installation oder derartige Fehler eine Leiterschleife zwischen Schutzleiter, PE, und dem N-Leiter auftritt.

Wenn der induktive Widerstand als Durchsteckwandler ausgeführt ist, der über den am Schutzschalter vorbeigeführten Schutzleiter gegeben wird, vermeidet man jegliche Art von Klemmen, Auftrennungen und nachträgliche Leiterverbindungen, um den schützenden induktiven Widerstand anzubringen.

Ein induktiver Widerstand weist den besonderen Vorteil auf, daß er bei den praktischen Erfordernissen verhältnismäßig klein ausgewählt werden kann. So genügt bei einem zu schützenden Netz bei einer Netzspannung von etwa 230 Volt ein Widestand in der Größenordnung von mindestens 2 Ohm. Ein derartiger Widerstand ist durch einen induktiven Widerstand leicht zu realisieren.

In erfindungsgemäßen Schutzeinrichtungen ist gemeinsam, daß es in einer sich gegebenenfalls bildenden Leitungsschleife aus N- und PE-Leiter im Fall von Fehlerströmen eine Verlagerung des Rückleitungsstromes durch Gegeninduktion in den N-Leiter in einem derartigen Ausmaß verhindert wird, daß der Schutzschalter zum Schutz vor Fehlerströmen nicht ansprechen könnte. Zugleich vermeidet man durch eine derartige Schutzeinrichtung eine Belastung des regulären Verbraucherstromkreises über den Außenleiter, früher Phasenleiter genannt, und den N-Leiter.

Die Erfindung soll nun anhand von in der Zeichnung grob schematisch gegebenen Ausführungsbeispielen näher erläutert werden:
- In FIG 1: ist eine Schutzeinrichtung anhand einer durch Fehlerstromschutzschalter geschützten Steckdose für den Fall eines fehlerhaften Schlusses zwischen dem N- und PE-Leiter in einem Verbraucher veranschaulicht. Überlagert dargestellt in strichlierter Leitungsführung ist die sich bildende Kurzschlußwindung veranschaulicht.
- In FIG 2: ist eine durch Fehlerstromschutzschalter gesicherte Steckdose und ihre Schutzwirkung bei einem Kurzschluß im Verbraucher wiedergegeben. Durch das sofortige Abschalten kann eine Gefährdung bei direkter Berührung nicht eintreten.
- In FIG 3: ist anhand einer durch Fehlerstromschutzschalter gesicherten Steckdose bei angestecktem Verbraucher veranschaulicht, wie aus einem gedachten komplexen Widerstand für den am Schutzschalter vorbeigeführten Schutzleiter ausgewählt werden kann.

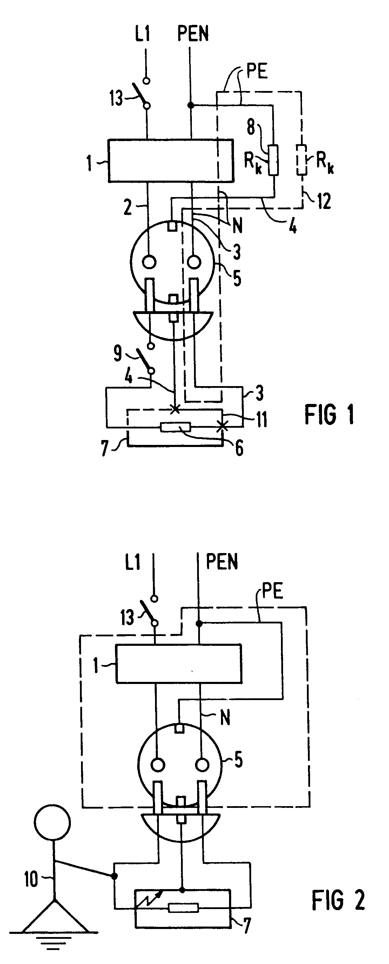

Die Schutzeinrichtung nach FIG 1 weist einen FI-Schutzschalter 1 in einem zu schützenden Netz mit den Außenleitern, in der Praxis L1, und dem N-Leiter 3 auf. Der PEN-Leiter ist vor dem FI-Schutzschalter in einen am Schutzschalter vorbeigeführten Schutzleiterzweig, den PE-Leiter, und in den durch den FI-Schutzschalter hindurchgeführten N-Leiter 3 aufgeteilt. An der Steckdose 5 im Ausführungsbeispiel ist ein Verbraucher 6 in einem Gehäuse 7 angeschlossen. Im Schutzleiterzweig 4, der am Schutzschalter vorbeigführt ist, ist ein Widerstand 8, ausgewählt aus einem gedachten komplexen Widerstand, eingeschaltet. Ein Betriebsschalter 9 zum Einschalten des Verbrauchers ist im wiedergegebenen Zustand nach FIG 1 geöffnet.

Zwischen dem N-Leiter 3 und dem Schutzleiterzweig 4, dem PE-Leiter, ist ein niederohmiger Kurzschluß 11 als Gerätefehler veranschaulicht. Dieser führt zu einer ersatzweise gezeichneten Stromschleife 12.

Solange der Betriebsschalter 9 geöffnet ist, kann bei der wiedergegebenen Situation eine Gefährdung nicht auftreten. Wird der Betriebsschalter 9 geschlossen, so könnte unter den eingangs geschilderten besonderen Umständen in der Ersatzweise gezeichneten Stromschleife eine Gegeninduktion dazu führen, daß ein Rückleitungsstrom vom Schutzleiter in den N-Leiter verdrängt würde. Durch den Widerstand 8 im Schutzleiter wird der Aufbau der Gegeninduktion und damit die Verdrängung soweit vermindert, daß über den am Schutzschalter vorbeigeführten Schutzleiterzweig ein Strom solcher Größenordnung fließen kann, daß der Fehlerstromschutzschalter anspricht und seine Netzleiterkontakte im Schutzschalter 1 öffnet. Die Bemessung des Widerstands 8 im Schutzleiter, des Widerstands Rₖ, erfolgt zweckmäßigerweise in Abstimmung auf die Ansprechempfindlichkeit des Schutzschalters 1, also auf seinen Nennfehlerstrom. Wenn das zu schützende Netz eine Betriebsspannung in der Größenordnung von 230 Volt aufweist, empfielt sich in vielen Fällen der Praxis ein Widerstand 8 im Schutzleiter in der Größenordnung von mindestens 2 Ohm.

Falls der Kurzschluß zwischen dem Außenleiter und dem N-Leiter auftritt, führt das bei eingeschaltetem Verbraucher zum sofortigen Abschalten durch den ohnehin vorgeordneten Leitungsschutzschalter 13, wie es in FIG 2 veranschaulicht ist. Ein Testwiderstand 10, stellvertretend für eine geerdete Person, die den Außenleiter an einem zusätzlichen Isolationsfehler direkt berührt, kann deshalb keinen gefährlichen Strom ziehen. Diese Schutzmaßnahme wird üblicherweise durch einen vorgeschalteten Leitungsschutzschalter 13 oder eine Sicherung erzielt.

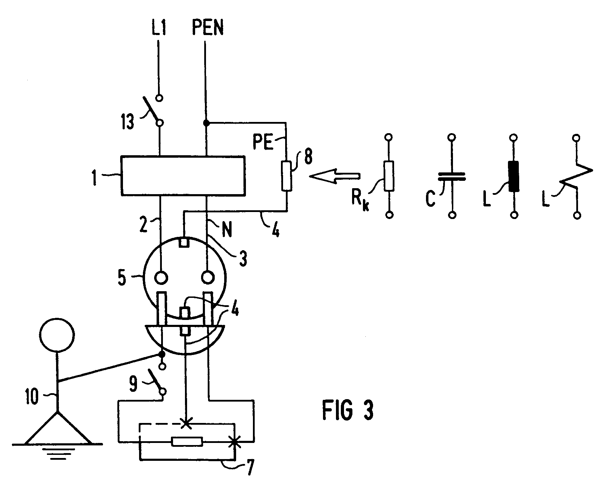

In FIG 3 ist veranschaulicht, wie der Widerstand 8 im Schutzleiterzweig 4 bestückt werden kann, nämlich:
a) durch einen komplexen Widerstand Rₖ
b) durch einen Kondensator C
c) durch eine Induktivität L
d) durch einen Durchsteckwandler mit der Induktivität L.

Der komplexe Widerstand für den Widerstand 8 kann an sich auch ein ohmscher Widerstand sein. Es ist jedoch in der Praxis schwierig einen ausreichend hohen Widerstand in kleiner Ausführung bereitzustellen, der zudem kurzschlußfest sein muß. Vergleichsweise ist die Situation bei einer kapazitiven Beschaltung. Da in der Praxis ausreichend hohe Induktivität durch geeingete kleine Spulen bereitgestellt werden kann, ist ein induktiver Widerstand für den Widerstand 8 besonders vorteihaft. Vorzugsweise kann die Induktivität mit einem weichmagnetischen Kern hoher Permeabilität ausgeführt sein.

Nach einer Weiterbildung vermeidet man jegliche zusätzliche Klemmstelle, bzw. auftrennen und wieder schließen des am Schutzschalter 1 vorbeigeführten Schutzleiterzweigs 4, wenn man den Widerstand 8 in Form einer Induktivität und in der Ausführung als Durchsteckwandler bereitstellt. Ein derartiger Durchsteckwandler kann über den Schutzleiterzweig 4 auch nachträglich aufgeschoben werden. Eine derartige induktive Beschaltung mit einen Durchsteckwandler kann sowohl innerhalb des Schutzschalters 1 als auch in externer Beschaltung erfolgen. Die induktive Beschaltung mit einem Durchsteckwandler kann also auch nachträglich einfach und ohne großen Bauteileaufwand durchgeführt werden und die Zuverlässigkeit auch von vorhandenen Fehlerstromschutzmaßnahmen erhöhen.

Im Ausführungsbeipiel nach FIG 3 kann der Testwiderstand 10 keinen gefährdenden Fehlerstrom ziehen. Das trifft für den Fall zu, daß der Betriebsschalter 9 geöffnet ist und am Außenleiter 2 an einem außerdem angenommenen Isolationsfehler vor den Betriebsschalter eine direkte Berührung erfolgt, da ein Fehlerstromschutzschalter mit seiner herkömmlichen Funktion anspricht. Wenn der Betriebsschalter 9 geschlossen wird, kann eine gefährdende Berührung generell nicht mehr erfolgen, da die erfindungsgemäße Schutzeinrichtung sicherstellt, daß über den Schutzleiter PE ein ausreichend großer Fehlerstrom vorbeigeführt wird, der zum Ansprechen des Fehlerstromschutzschalters führt.

Unter Berücksichtigung der grundsätzlichen und bekannten Unterschiede bei einem Differenzstromschalter, der für seine Betriebsweise netzspannungsabhängig ist, gelten die Betrachtungen entsprechend, so daß die Schutzeinrichtungen auch hierbei und in besonders ungünstigen Sonderfällen das Ansprechen des Differenzstromschutzschalters sicherstellt.

## Patentansprüche

1. Schutzeinrichtung mit Fehlerstromschutzschalter oder Differenzstromschutzschalter, bei der ein Schutzleiter des zu schützenden Netzes in einem Schutzleiterzweig (4) bestimmungsgemäß am Schutzschalter (1) vorbeigeführt ist, wobei der Schutzleiter mit dem Neutralleiter versorgungsseitig vor dem Schutzschalter zum sogenannten PEN-Leiter verbunden ist, **dadurch gekennzeichnet**, daß in den Schutzleiterzweig (4) ein Widerstand (8), ausgewählt aus einem gedachten komplexen Widerstand, eingeschaltet ist.

2. Schutzeinrichtung nach Anspruch 1, **dadurch gekennzeihnet,** daß der Widerstand (8) ein induktiver Widerstand im Sinne des Imaginärteils eines komplexen Widerstandes ist.

3. Schutzeinrichtung nach Anspruch 1, **dadurch gekennzeichnet,** daß der Widerstand (8) ein ohmscher Widerstand im Sinne des Realteils eines komplexen Widerstands ist.

4. Schutzeinrichtung nach einem der Ansprüche 1 bis 3, **dadurch gekennzeichnet**, daß der Widerstand (8) bei einem 230-Volt-Netz in der Größenordnung von mindestens 2 Ohm liegt.

5. Schutzeinrichtung nach Anspruch 2, **dadurch gekennzeichnet,** daß der induktive Widerstand als Durchsteckwandler ausgeführt ist, der klemmenlos und unterbrechungsfrei in den Schutzleiterzweig (4) einschaltbar ist.

## Claims

1. A protective device with a fault current circuit breaker or a differential current circuit breaker, wherein a protective earth conductor of the network to be protected leads past the circuit breaker (1) as specified in a protective earth conductor arm (4), where the protective earth conductor is connected to the neutral conductor on the supply side before the circuit breaker to form the so-called PEN conductor, characterised in that a resistance (8), selected from an imaginary impedance, is connected into the protective earth conductor arm (4).

2. A protective device as claimed in Claim 1, characterised in that the resistance (8) is an inductive resistance in the sense of the imaginary component of an impedance.

3. A protective device as claimed in Claim 1, characterised in that the resistance (8) is an ohmic resistance in the sense of the real component of an impedance.

4. A protective device as claimed in one of Claims 1 to 3, characterised in that in the case of a 230 V network, the resistance (8) has a value in the order of at least 2 Ohm.

5. A protective device as claimed in Claim 2, characterised in that the inductive resistance is constructed as a bushing transformer, which can be connected into the protective earth conductor arm (4) without terminals and uninterruptedly.

## Revendications

1. Dispositif de protection à disjoncteur à courant de défaut ou à disjoncteur à courant différentiel et dans lequel une branche (4) d'un conducteur de protection du réseau à protéger passe suivant les spécifications devant le disjoncteur (1), le conducteur de protection étant relié, côté alimentation, au conducteur neutre en amont du disjoncteur, pour former ce qu'on appelle un conducteur PEN, caractérisé par le fait que dans la branche (4) du conducteur de protection est branchée une résistance (8) sélectionnée constituée d'une résistance complexe virtuelle.

2. Dispositif de protection suivant la revendication 1, caractérisé par le fait que la résistance (8) est une résistance inductive au sens de la partie imaginaire d'une résistance complexe.

3. Dispositif de protection suivant la revendication 1, caractérisé par le fait que la résistance (8) est une résistance ohmique au sens de la partie réelle d'une résistance complexe.

4. Dispositif de protection suivant l'une des revendications 1 à 3, caractérisé par le fait que la résistance (8) a un ordre de grandeur d'environ 2 ohms dans le cas d'un réseau à 230 volts.

5. Dispositif de protection suivant la revendication 2, caractérisé par le fait que la résistance inductive a la forme d'un transformateur de courant sans primaire, qui peut être branché sans bornes et sans interruption dans la branche (4) du conducteur de protection.
